# EUROPEAN PATENT SPECIFICATION

(11) **EP 2 174 777 B1**
(45) Date of publication and mention of the grant of the patent: **28.09.2011**
(21) Application number: 09166303.9
(22) Date of filing: 24.07.2009
(51) Int. Cl.: B32B 3/06, B32B 7/08, E04C 2/34

(54) **Sandwich concrete panel and method of making the same**
Sandwichbetonplatte und Verfahren zu deren Herstellung
Panneau sandwich en béton et son procédé de fabrication

(30) Priority: 31.07.2008 FI 20085755
(43) Date of publication of application: 14.04.2010
(73) Proprietor: Paroc Oy Ab, 01300 Vantaa (FI); Betoniluoma Oy, 64700 Teuva (FI); Piimat Oy, 01260 Vantaa (FI)
(72) Inventor: Sevon, Jukka, 21600, Pargas (FI); Hyttinen, Matti, 02200, Espoo (FI); Luoma, Rauno, 64700, Teuva (FI)
(74) Representative: LEITZINGER OY

(56) References cited:
- EP-A- 1 106 742
- WO-A-81/02758
- WO-A-94/09221
- US-A- 4 530 191
- US-A- 4 847 140

## Description

The present invention relates to a sandwich concrete panel, comprising a body-forming internal leaf, a mineral wool insulation layer laid thereon, and a outer leaf placed on top of the insulation layer. The invention relates further to a method of making a sandwich concrete panel, said panel comprising a body-forming concrete internal leaf, a mineral wool insulation layer present thereon, and an outer leaf present on top of the insulation layer.

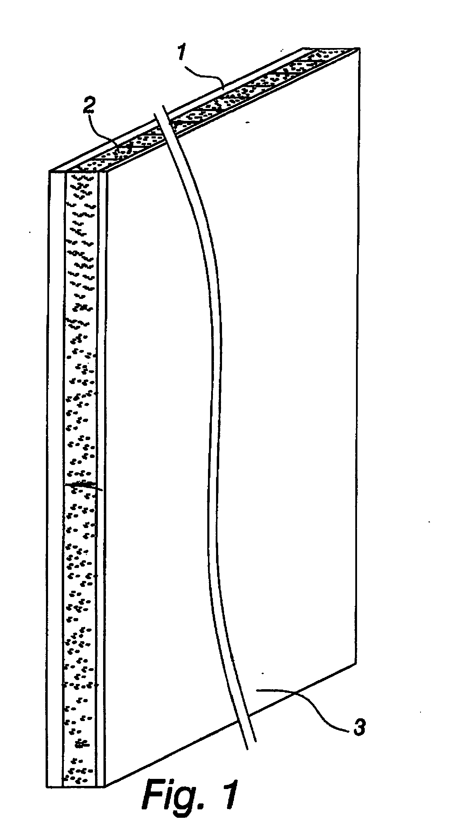

Today, sandwich concrete panels are typically made in such a way that on top of a body-forming concrete internal leaf 1 is laid an insulation layer 2 made up of mineral wool slabs, and on top of the insulation layer is formed a concrete outer leaf 3. Fig. 1 shows schematically a typical structure for such a sandwich concrete panel of the prior art. US4640074A **and** US4283896 **disclose exemplary prior art sandwich concrete panels**.

EP1106742 discloses perpendicular fiber orientation of a mineral wool layer for improving compressive strength in insulating concrete slabs.

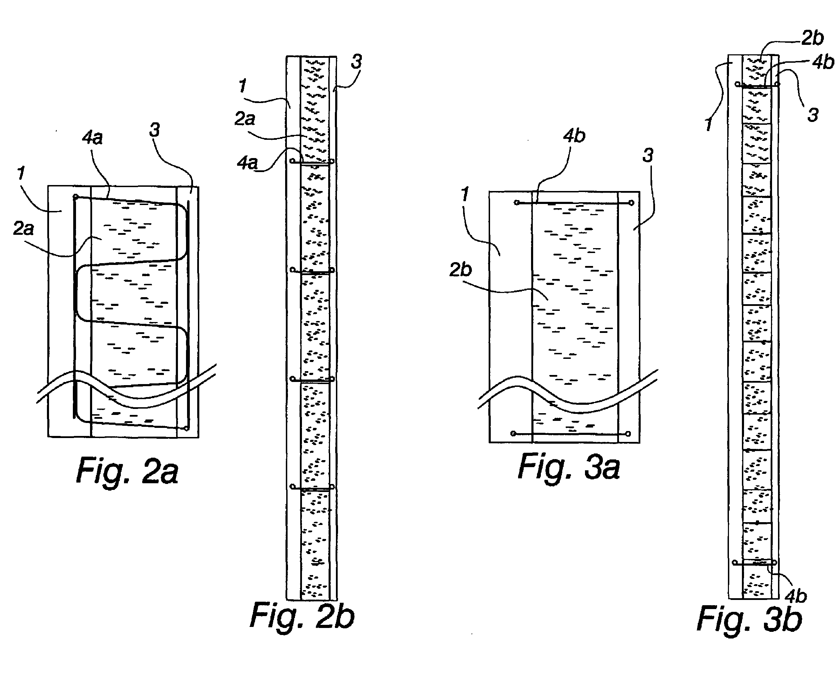

Figs. 2a and 2b depict the structure of a prior art sandwich concrete panel shown in fig. 1 more precisely in vertical and horizontal sectional views, respectively. According to current building regulations in Finland, the height of a sandwich concrete panel is 3 m, the length being e.g. about 3-6 m. The dimensions of mineral wool slabs 2a used in the panel are usually 600x1500 mm, two of those on top of each other being laid in several adjacent rows to match the dimensions of a sandwich concrete panel. In these panels, the fibers lie in a plane substantially codirectional with the surface of the leaves. The seams between side-by-side arranged rows of mineral wool slabs are each fitted with a ladder truss 4a, which interconnects the internal and outer leaves, extends through the insulation layer, and covers the panel across its entire height, for securing the outer leaf to the internal leaf. In a traditional sandwich concrete panel of this type, the internal leaf is within the range of 80-150 mm in thickness, the insulation layer being 160 mm in thickness, and the outer leaf being not less than 60 mm in thickness. The compressive strength of a mineral wool slab used in the structure is typically about 5 kPa and its splitting strength is likewise about 5 kPa or less. This traditional sandwich concrete panel requires relatively large amounts of reinforcement as a result of using ladder trusses and strengthening the outer leaf and the panel's weight becomes high.

It is an objective of the present invention to provide a solution, whereby the assembly can be made lighter and the number of trusses, as well as the amount of outer leaf reinforcement, can be substantially reduced. In order to accomplish this objective, the invention provides a sandwich concrete panel which is characterized in that the mineral wool insulation layer is lamellar In structure, wherein the fibers of mineral wool are substantially perpendicular to the surface of the internal and outer leaves, in that the outer leaf Is constructed in fiberplastic-reinforced concrete, and in that the Internal leaf and the outer leaf are secured to each other by push-through trusses extending through the insulation layer. The outer leaf has a thickness which is preferably within the range of about 30-40 mm.

On the other hand, the invention provides a method which is characterized in that the sandwich concrete panel is manufactured in a mold, onto whose bottom is first performed the casting of the outer leaf in concrete mix with plastic fibers blended therein, the still unhardened mix is fitted with push-through trusses at desired points and on top of the cast outer leaf is placed a mineral wool layer of lamellar structure, in which the fibers of mineral wool settle in an orientation substantially perpendicular to the surface of the outer leaf, and finally there is performed the casting of the internal leaf on top of the insulation layer.

The invention will now be described in more detail with reference to the accompanying drawings, in which:
- fig. 1: shows the structure of a sandwich concrete panel in a schematic view of principle,
- figs. 2a, 2b: show in schematic views of principle the structure of one sandwich concrete panel of the prior art in vertical and horizontal sections, respectively, and
- figs. 3a, 3b: show in schematic views of principle the structure of one embodiment for a sandwich concrete panel of the invention in vertical and horizontal sections, respectively.

The sandwich concrete panel according to the invention, shown in figs. 3a, 3b, includes a internal leaf 1 on top of which is formed an insulation layer 2 from mineral wool of lamellar structure. The size of lamellae 2b is typically 200x1500 mm and the thickness thereof can be e.g. within the range of 160-450 mm or even more than 450 mm. The lamellar structure enables increasing the insulation layer thickness as a single layer structure, while with the slab material, the creation of an increased insulation thickness requires two or more layers. Moreover, in a mineral wool insulation of lamellar structure, the fibers lie perpendicularly to the surface of internal and outer leaves, providing strength qualities better than those of the slab structure, whereby the insulation layer may have a compressive strength which is e.g. about 50 kPa and a splitting strength which is about 80 kPa. An outer leaf 3 is formed of fiberplastic-reinforced concrete, wherein the fibers are blended within the concrete mix prior to casting the outer leaf. By virtue of this fiber-reinforcement, the leaf can be made relatively thin, e.g. within the range of 30-40 mm, resulting in an outer leaf which is substantially lighter in weight than those of the prior art. In addition, there is virtually no risk of corrosion in the absence of steel reinforcements. This enables securing the internal and outer leaves to each other by means of push-through trusses 4b alone, the number of which can be as few as 4 pcs, e.g. one at each corner. The use of such push-through trusses provides a major saving in the amount of metal as compared to ladder trusses of the prior art, which cover the entire height of an panel. The push-through trusses 4b can be e.g. rod-shaped members or said trusses may resemble ladder trusses of the prior art, yet with a substantially reduced vertical dimension of e.g. 10-50 cm. Furthermore, in the most preferred case, such push-through trusses are only needed in a line between two outermost mineral wool lamellae 2b present at each vertical edge. Long panels may necessitate the use of push-through trusses also in the middle portion of a panel.

The sandwich concrete panel of the invention is manufactured preferably in such a way that onto the bottom of a mold is first cast an outer leaf of fiberplastic-reinforced concrete mix which is fitted with the push-through trusses 4b at desired points while the outer leaf is still in an unhardened condition. This is followed by laying the lamellae 2b of mineral wool on top of the outer leaf 3, such that the push-through trusses 4b are left between two adjacent rows of lamellae, whereby said lamellae of mineral wool retain the push-through trusses stationary during the subsequent casting of the internal leaf 1 performed on top of the insulation layer 2. After the concrete has hardened, the panel is ready for a delivery to the construction site. The push-through trusses 4b are preferably disposed in such a way that there is one of them at each corner of the sandwich concrete panel, whereby the push-through trusses are located at a distance of about 200 mm from the panel's lateral edges and preferably likewise at a distance of about 200 mm from the panel's top edge and bottom edge, respectively.

## Claims

1. A sandwich concrete panel, comprising a body-forming internal leaf (1), a mineral wool insulation layer (2) laid thereon, and an outer leaf (3) placed on top of the insulation layer, **characterized in that** the mineral wool insulation layer (2) is lamellar in structure, In which lamellae (2b) the fibers of mineral wool are substantially perpendicular to the surfaces of the internal and outer leaves, **in that** the outer leaf (3) is constructed in fiberplastic-reinforced concrete, and **in that** the Internal (1) and the outer leaves (3) are secured to each other by push-through trusses (4b) extending through the insulation layer (2).

2. A sandwich concrete panel as set forth in claim 1, **characterized in that** the outer leaf (3) has its thickness within the range of about 30-40 mm.

3. A sandwich concrete panel as set forth in claim 1 or 2, **characterized in that** the splitting strength of mineral wool is within the range of about 60-100 kPa.

4. A sandwich concrete panel as set forth in claim 3, **characterized in that** the splitting strength of mineral wool is within the range of about 75-85 kPa.

5. A sandwich concrete panel as set forth in any of claims 1-4, **characterized in that** the total number of push-through trusses (4b) is four, one in each corner area of the sandwich concrete panel.

6. A sandwich concrete panel as set forth in any of claims 1-5, **characterized in that** the insulation layer (2) has its thickness within the range of about 160-600 mm, and that it is integral and In a single layer.

7. A sandwich concrete panel as set forth in claim 3, **characterized in that** the insulation layer (2) has its thickness within the range of about 300-450 mm.

8. A method of making a sandwich concrete panel, said panel comprising a body-forming concrete internal leaf (1), a mineral wool insulation layer (2) present thereon, and an outer leaf (3) present on top of the insulation layer, **characterized In that** the sandwich concrete panel is manufactured in a mold, onto whose bottom is first performed the casting of the outer leaf (3) in concrete mix with plastic fibers blended therein, the still unhardened mix is fitted with push-through trusses (4b) at desired points and on top of the outer leaf is placed a mineral wool layer of lamellar structure, in which lamellae (2b) the fibers of mineral wool settle In an orientation substantially perpendicular to the surface of the outer leaf (3), and finally there is performed the casting of the internal leaf (1) on top of the insulation layer.

9. A method as set forth In claim 8, **characterized in that** the lamellae (2b) of mineral wool are disposed in such a way that the trusses (4b) are left in a vertical line between two currently adjacent lamellae (2b of mineral wool.

10. A method as set forth in claim 8 or 9, **characterized in that** the lamellae are constructed in a single layer structure.

## Patentansprüche

1. Sandwichbetonplatte, ein den Grundkörper bildendes inneres Blatt (1), eine darauf liegende Mineralwolle-Isolierschicht (2) und ein auf der Isolierschicht angeordnetes äußeres Blatt (3) umfassend, **dadurch gekennzeichnet, dass** die Mineralwolle-Isolierschicht (2) eine lamellenartige Struktur aufweist, wobei in den Lamellen (2b) die Fasern der Mineralwolle im Wesentlichen senkrecht zu den Oberflächen des inneren und des äußeren Blattes liegen, dass das äußere Blatt (3) in mit Faser-Kunststoff verstärktem Beton aufgebaut ist und dass das innere (1) und das äußere Blatt (3) mit hindurchgehenden Streben (4b) aneinander befestigt sind, die sich durch die Isolierschicht (2) hindurch erstrecken.

2. Sandwichbetonplatte nach Anspruch 1, **dadurch gekennzeichnet, dass** das äußere Blatt (3) eine Dicke im Bereich von etwa 30 bis 40 mm aufweist.

3. Sandwichbetonplatte nach Anspruch 1 oder 2, **dadurch gekennzeichnet, dass** die Spaltfestigkeit der Mineralwolle im Bereich von etwa 60 bis 100 kPa liegt.

4. Sandwichbetonplatte nach Anspruch 3, **dadurch gekennzeichnet, dass** die Spaltfestigkeit der Mineralwolle im Bereich von etwa 75 bis 85 kPa liegt.

5. Sandwichbetonplatte nach einem der Ansprüche 1 bis 4, **dadurch gekennzeichnet, dass** die Gesamtanzahl der durchgehenden Streben (4b) vier beträgt: eine in jedem Eckbereich der Sandwichbetonplatte.

6. Sandwichbetonplatte nach einem der Ansprüche 1 bis 5, **dadurch gekennzeichnet, dass** die Isolierschicht (2) eine Dicke aufweist, die im Bereich von etwa 160 bis 600 mm liegt und dass sie einstückig und einschichtig ist.

7. Sandwichbetonplatte nach Anspruch 3, **dadurch gekennzeichnet, dass** die Isolierschicht (2) eine Dicke im Bereich von etwa 300 bis 450 mm aufweist.

8. Verfahren zur Herstellung einer Sandwichbetonplatte, wobei die Platte ein den Grundkörper bildendes inneres Blatt (1), eine darauf liegende Mineralwolle-Isolierschicht (2) und ein auf der Isolierschicht angeordnetes äußeres Blatt (3) umfasst, **dadurch gekennzeichnet, dass** die Sandwichbetonplatte in einer Form hergestellt wird, auf deren Boden zuerst das Gießen des äußeren Blattes (3) mit einer Betonmischung mit eingemischten Kunststofffasern ausgeführt wird, in die noch nicht ausgehärtete Mischung an gewünschten Punkten durchgehende Streben (4b) eingesetzt werden und auf dem äußeren Blatt eine Mineralwolleschicht mit lamellenartiger Struktur angeordnet wird, wobei sich in den Lamellen (2b) die Fasern der Mineralwolle in einer Ausrichtung ordnen, die im Wesentlichen senkrecht zur Oberfläche des äußeren Blattes (3) liegt, und schließlich das Gießen des inneren Blattes (1) auf der Isolierschicht ausgeführt wird.

9. Verfahren nach Anspruch 8, **dadurch gekennzeichnet, dass** die Lamellen (2b) aus Mineralwolle derart angeordnet werden, dass die Streben (4b) in einer vertikalen Linie zwischen zwei derzeit nebeneinander liegenden Lamellen (2b) aus Mineralwolle verbleiben.

10. Verfahren nach Anspruch 8 oder 9, **dadurch gekennzeichnet, dass** die Lamellen in einer einschichtigen Struktur aufgebaut werden.

## Revendications

1. Panneau sandwich en béton, comprenant un feuillard interne formant son corps (1), une couche isolante en laine minérale (2) posée dessus et un feuillard externe (3) placé sur le dessus de la couche isolante, **caractérisé en ce que** la couche isolante en laine minérale (2) est de structure lamellaire et que, dans ses lamelles (2b), les fibres de laine minérale sont sensiblement perpendiculaires aux surfaces des feuillards interne et externe du fait que le feuillard externe (3) est composé de béton renforcé aux fibres de plastique et que les feuillards interne (1) et externe (3) sont fixés l'un à l'autre par des brides traversantes (4b) s'étendant dans la couche isolante (2).

2. Panneau sandwich en béton selon la revendication 1, **caractérisé en ce que** le feuillard externe (3) a une épaisseur située dans la fourchette d'environ 30 à 40 mm.

3. Panneau sandwich en béton selon la revendication 1 ou 2, **caractérisé en ce que** la résistance à la traction par fendage de la laine minérale se situe dans la fourchette d'environ 60 à 100 kPa.

4. Panneau sandwich en béton selon la revendication 3, **caractérisé en ce que** la résistance à la traction par fendage de la laine minérale se situe dans la fourchette d'environ 75 à 85 kPa.

5. Panneau sandwich en béton selon l'une quelconque des revendications 1 à 4, **caractérisé en ce que** le nombre total de brides traversantes (4b) est de quatre, une au niveau de chaque coin du panneau sandwich en béton.

6. Panneau sandwich en béton selon l'une quelconque des revendications 1 à 5, **caractérisé en ce que** la couche isolante (2) a une épaisseur située dans la fourchette d'environ 100 à 600 mm et qu'elle forme une seule pièce en une seule épaisseur.

7. Panneau sandwich en béton selon la revendication 3, **caractérisé en ce que** la couche isolante (2) a une épaisseur située dans la fourchette d'environ 300 à 450 mm.

8. Procédé de fabrication d'un panneau sandwich, ledit panneau comprenant un feuillard interne formant son corps (1), une couche isolante en laine minérale (2) posée dessus et un feuillard externe (3) placé sur le dessus de la couche isolante, **caractérisé en ce que** le panneau sandwich en béton est fabriqué dans un moule sur le fond duquel est d'abord réalisé le coulage du feuillard externe (3) dans un mélange de béton où sont mêlées des fibres de plastique, le mélange non encore durci est équipé de brides traversantes (4b) à des points souhaités et on place sur le dessus du feuillard externe une couche de laine minérale de structure lamellaire dans les lamelles (2b) de laquelle les fibres de laine minérale se mettent dans une orientation sensiblement perpendiculaire à la surface du feuillard externe (3) et on réalise pour finir le coulage du feuillard interne (1) sur le dessus de la couche isolante.

9. Procédé selon la revendication 8, **caractérisé en ce que** les lamelles (2b) de laine minérale sont disposées de manière à ce que les brides (4b) restent en ligne verticale entre deux lamelles momentanément adjacentes (2b) de laine minérale.

10. Procédé selon la revendication 8 ou 9, **caractérisé en ce que** les lamelles (2b) sont réalisées avec une structure monocouche.
